# EUROPÄISCHE PATENTANMELDUNG

(11) **EP 3 461 330 A1**
(43) Veröffentlichungstag der Anmeldung: **03.04.2019**
(21) Anmeldenummer: 17194452.3
(22) Anmeldetag: 02.10.2017
(51) Int. Cl.: A01K 59/04

(54) **SIEBVORRICHTUNG ZUM SIEBEN VON ZÄHFLÜSSIGEN ODER PASTÖSEN SUBSTANZEN**

(71) Anmelder: Geiger, Johannes, 49078 Osnabrück (DE)
(72) Erfinder: Geiger, Johannes, 49078 Osnabrück (DE)
(74) Vertreter: Zenz Patentanwälte Partnerschaft mbB

(57) **Zusammenfassung**

Eine Vorrichtung zum Sieben von zähflüssigen oder pastösen Substanzen, insbesondere von Honig, mit einem Spitzsieb (1), welches wenigstens abschnittsweise entlang des Umfangs einer Einfüllöffnung in einer Siebhalterung (2) fixiert ist und sich unterhalb der Siebhalterung (2) erstreckt.

Eine Abstreifanordnung überstreicht das Spitzsieb (1) auf dessen Innenseite abschnittsweise, wobei die Abstreifanordnung einen mit einer Welle (5) gekoppelten Antrieb (4) aufweist. Die Welle erstreckt sich von dem Antrieb (4) durch die Einfüllöffnung in das Spitzsieb (1) entlang einer zentralen Symmetrieachse des Spitzsiebes (1) und ist durch den Antrieb (4) antreibbar. Mehrere Abstreifelemente sind drehfest mit der Welle (5) gekoppelt und erstrecken sich von der Welle (5) bis zur Innenseite des Spitzsiebes (1). Ein Zentrierelement ist unterhalb der Abstreifelemente (6a, 6b, 6c) drehbar mit der Welle (5) gekoppelt und stützt sich in dem Spitzsieb (1) zur Zentrierung und Lagerung der Welle (5) darin ab.

## Beschreibung

Die Anmeldung betrifft eine Vorrichtung zum Sieben von zähflüssigen oder pastösen Substanzen. Insbesondere betrifft die Anmeldung eine Vorrichtung zum Sieben von zähflüssigen oder pastösen Substanzen, bei der die Substanz in die Öffnung eines Spitzsiebes gegeben wird, um unerwünschte Nebenstoffe aus der Substanz zu entfernen.

Eine besondere Eignung der Vorrichtung besteht in der Anwendung beim Sieben von Honig. Bei der Ernte und Verarbeitung von Honig wird der Honig aus den Bienenwaben durch Schleudern entfernt, nachdem die Deckelung der Waben abgenommen wurde. Ausschließlich geschleuderter Honig ist jedoch regelmäßig mit unerwünschten Nebenstoffen, beispielsweise Wachsteilchen, Pollenklümpchen und ggf. Chitinteilchen verunreinigt. Die Verunreinigungen werden durch das Sieben und/oder Seien des Honigs entfernt.

Es ist bekannt, den Honig dazu durch ein Spitzsieb zu geben, welches die Nebenstoffe zurückhält, während der Honig hindurchtritt. Aufgrund seiner Viskosität und der Feinheit der Siebporen ist ein solcher Vorgang jedoch zeitaufwändig. Außerdem setzt sich das Sieb mit dessen Benutzung zunehmend mit Nebenstoffen zu, was den Siebvorgang zusätzlich verlangsamt.

Es stehen jedoch keine geeigneten Verfahren zur Verfügung, um den Siebvorgang in qualitativ hochwertiger Weise kontinuierlich durchzuführen und gleichzeitig Honigkristalle zu entfernen oder zu zerkleinern.

Der Erfindung liegt die Aufgabe zugrunde, einen Siebvorgang von zähflüssigen oder pastösen Substanzen kontinuierlich und besonders rasch und ohne Erfordernis von kräftezehrender körperlicher Arbeit durchzuführen.

Diese Aufgabe wird gelöst durch eine Vorrichtung zum Sieben von Honig mit den Merkmalen des Patentanspruches 1.

Erfindungsgemäß weist die Vorrichtung zum Sieben von zähflüssigen oder pastösen Substanzen ein Spitzsieb auf, welches in einer Siebhalterung fixiert ist. Dazu ist das Spitzsieb entlang wenigstens einiger Abschnitte des Umfangs einer Einfüllöffnung gehalten und erstreckt sich unterhalb der Siebhalterung zulaufend bis zu seiner Spitze. Dabei hat das Spitzsieb zumindest abschnittsweise die Form eines Kegelmantels, ist also entlang einer Kegelachse rotationssymmetrisch ausgebildet. Derartige Spitzsiebe sind mit Maschen aus Kunststoffen verformbar ausgebildet und z.B. aus Nylon gefertigt. Die Maschengröße wird gemäß der erwünschten Filterwirkung gewählt und beträgt oft Bruchteile von Quadratmillimetern bis zu wenigen Quadratmillimetern.

Die erfindungsgemäße Vorrichtung weist außerdem eine Abstreifanordnung auf, welches das Spitzsieb auf dessen Innenseite abschnittsweise und wiederholt oder kontinuierlich überstreichen kann. Diese Abstreifanordnung weist einen Antrieb auf und eine Mehrzahl von Abstreifelementen, welche die Innenseite des Spitzsiebes abschnittsweise berühren und überstreichen. Der Antrieb ist z.B. oberhalb der Einfüllöffnung des Spitzsiebes angeordnet ist. Eine Welle ist mit dem Antrieb gekoppelt und erstreckt sich durch die Einfüllöffnung des Spitzsiebes entlang dessen zentraler Symmetrieachse. Die Welle kann mit dem Antrieb beispielsweise über eine Kupplung oder ein Getriebe oder unmittelbar gekoppelt sein. Über die Kopplung ist die Welle durch den Antrieb drehbar antreibbar.

Die Abstreifelemente sind drehfest mit der Welle gekoppelt und erstrecken sich von der Welle bis zur Innenseite des Spitzsiebes. Weiterhin ist ein Zentrierelement vorgesehen, welches ebenfalls mit der Welle gekoppelt ist und sich in dem Spitzsieb abstützt, wodurch die Welle im Spitzsieb zentriert und gelagert ist.

Das Zentrierelement ist drehbar mit der Welle gekoppelt und unterhalb der Abstreifelemente an der Welle angeordnet. Das Zentrierelement sorgt mit seiner Abstützung im Inneren des Siebes dafür, dass eine Zentrierung und Lagerung der Welle im Spitzsieb sichergestellt ist. Das Spitzsieb übernimmt entsprechend sowohl die Funktion des Siebens, als auch eine mechanische Funktion als stützendes Lager, indem es als Stütze für das Zentrierelement wirkt. Die Anordnung des Zentrierelementes unterhalb der Abstreifelemente und gleichzeitige Abstützung des Zentrierelementes in dem Spitzsieb sorgt dafür, dass das Sieb im Bereich zwischen der Siebhalterung und dem Zentrierelement gestrafft bleibt und auf diese Weise in besonders effektiver und gleichbleibender Weise von den Abstreifelementen überstrichen werden kann.

Diese Anordnung gewährleistet eine besonders einfache und stabile sowie selbstausrichtende Konstruktion. Die Welle wird im Sieb gelagert und zentriert und die an der Welle angeordneten Abstreifelemente sind damit jederzeit in der gewünschten Weise im Sieb positioniert und optimal ausgerichtet. Eine flexible Verformbarkeit des Siebes gewährleistet, dass die Anordnung aus Welle mit Abstreifelementen und Sieb sich zueinander jederzeit in der gewünschten Ausrichtung befinden, dass die Abstreifelemente am Sieb anliegen und andererseits an der Welle befestigt sind, die im Sieb stützend gelagert ist. Diese selbsttragende Anordnung und Kopplung von Lager und Abstreifelementen erlaubt einen einfachen Aufbau der Anordnung und einen problemlosen kontinuierlichen Betrieb.

Die Abstreifelemente sind zunächst dazu vorgesehen in den Kontaktbereichen, in welchen die Abstreifelemente über die Innenseite des Spitzsiebes streichen, in das Spitzsieb eingefüllten Substanz durch das Spitzsieb hindurch zu streichen. Außerdem erfüllen die Abstreifelemente den weiteren Zweck, Verunreinigungen, die sich an der Innenseite des Spitzsiebes festgesetzt oder verfangen haben, von dem Spitzsieb abzustreifen, so dass die Verunreinigungen im Inneren des Spitzsiebes und durch die Schwerkraft getrieben in die Spitze des Spitzsiebes sinken oder im Sieb auf der eingefüllten Substanz, z.B. bei Einfüllen von Honig als Wachsschicht aufschwimmen. Im Falle des Siebens von Honig werden in diesem Vorgang auch Honigkristalle fein zerrieben, bevor sie durch das Sieb gestrichen werden, was die Qualität des Honigs als feinkristallinem Honig begünstigt.

Die Abstreifelemente können in sehr unterschiedlicher Weise ausgeführt sein, beispielsweise kann es sich um flexible Kunststoffflügel handeln, welche sich vollständig verformbar und elastisch von der Welle bis zur Innenseite des Spitzsiebes erstrecken. Alternativ kann es sich um zumindest teilweise oder vollständig steife Anordnungen handeln, deren Ausrichtung und Länge an den Abstand der Welle von der Innenseite des Spitzsiebes abgestimmt ist. Wesentlich ist, dass die Abstreifelemente wenigstens abschnittsweise, also begrenzte innere Flächen des Spitzsiebs überstreichend angeordnet sind. Die überstrichenen Bereiche bleiben auf diese Weise frei und durchlässig, um das Sieben des Honigs zu begünstigen. Weiterhin wird durch die Abstreifbewegung der Durchtritt des gereinigten Honigs durch das Spitzsieb erleichtert.

Bei dem Antrieb kann es sich um einen motorischen, vorzugsweise elektrischen Antrieb oder auch einen Handantrieb handeln. Dabei kann die Kopplung zwischen dem Antrieb selbst und der in das Spitzsieb eintauchenden Welle so gestaltet sein, dass der Abstand zwischen Antrieb und Spitzsieb derart bemessen ist, dass eine Verunreinigung des Honigs im Spitzsieb durch den Antrieb oder Schmierstoffe des Antriebes verhindert wird. Dazu können beispielsweise Umlenkmittel oder Kupplungsmittel im Kopplungsstrang zwischen Antrieb und Welle vorgesehen sein. Es kann weiterhin vorgesehen sein, aufhebbare Kupplungsmittel vorzusehen, um den Antrieb von der Welle zeitweise zu entkoppeln.

In einer bevorzugten Ausführungsform der Erfindung sind die Abstreifelemente so angeordnet, dass sie sich radial von der Welle erstrecken. Während es grundsätzlich möglich ist, die Abstreifelemente schräg von der Welle aus verlaufen zu lassen, bietet die radiale Erstreckung der Abstreifelemente von der Welle eine besonders stabile und leicht zu fertigende Gestaltung. Es ist beispielsweise möglich, zwei Abstreifelemente vorzusehen, wobei eine Durchgangsöffnung in der Welle einen durchgehenden Träger aufnimmt, der beidseitig der Welle zwei gegenüberliegende Abstreifelemente bildet. Dazu können auf den Träger, beispielsweise einen metallischen Stab mit rundem oder mehreckigem Querschnitt, endseitig Schaber, beispielsweise in Gestalt von Kunststoffaufsätzen angeordnet werden.

Es ist besonders bevorzugt, wenn die Abstreifelemente bewegbare Abschnitte aufweisen, die gegenüber der Welle schwenkbar sind. Mit einer zumindest teilbewegbaren Gestaltung der Abstreifelemente ist es möglich, dass sich die Abstreifelemente der Kontur des Spitzsiebes in dessen Inneren bestmöglich anpassen. Wird beispielsweise mit Austauschsieben gearbeitet, kann auf diese Weise mit leicht abweichenden Verjüngungswinkeln des Spitzsiebes ein problemloser Siebvorgang erreicht werden. Durch das Schwenken der bewegbaren Abschnitte der Abstreifelemente gegenüber der Welle, passen sich die Abstreifelemente dem Siebwinkel jederzeit an.

Es ist besondere bevorzugt, wenn die vorstehend genannten bewegbaren Abschnitte mit elastischen Mitteln zum Schwenken in eine Ruhestellung vorgespannt sind. Dazu können die bewegbaren Abschnitte einerseits mit Federelementen oder sonstigen elastischen Elementen versehen sein, andererseits können die bewegbaren Abschnitte selbst auch elastisch ausgebildet sein. Beispielsweise können die Abschnitte der Abstreifmittel, welche in Anlage zu dem Sieb gelangen, als flexible Kunststoff- oder Gummiabschnitte ausgebildet sein, die in sich eine Biegung und Schwenkung in Anpassung an die Sieboberfläche erlauben.

In einer Weiterbildung der Erfindung ist es vorgesehen, dass die Abstreifelemente in radialer Richtung von der Welle ausgehend wenigstens teilweise elastisch ausgebildet sind.

In dieser Gestaltung wird also eine Längenveränderlichkeit entgegen elastischer Rückstellkräfte in radialer Richtung vorgesehen. Dies ist besonders dann sinnvoll, wenn die Abstreifmittel mit einer gewissen Toleranz in verschiedenen Höhen über der Siebspitze ihre Wirkung entfalten sollen. Je nachdem, in welchem Abstand die innere Siebfläche von der Welle angeordnet ist, kann im Rahmen der Elastizität der Abstreifmittel der Kontur des Siebes gefolgt werden. Außerdem ist es möglich, bei etwaigen temperaturbedingten oder ermüdungsbedingten Verformungen während des Betriebes eine dauerhafte Anlage der Abstreifelemente an der Sieboberfläche zu gewährleisten.

In einer bevorzugten Ausbildung der letztgenannten Gestaltung ist das Zentrierelement an dem nach unten gerichteten Ende der Welle angeordnet und als Rad ausgebildet, welches sich entlang seines gesamten Umfangs an dem Spitzsieb abstützt.

Die Ausbildung als Rad stellt sicher, dass der kreisrunde äußere Umfang des Zentrierelementes eine entlang des gesamten Umfanges bestmögliche Abstützung an dem Spitzsieb gewährleistet. Das Rad kann insbesondere im Außenumfang eine Gummierung aufweisen, welche eine besonders flexible und verlässliche Anlage für das Spitzsieb bildet. Es kann weiterhin vorgesehen sein, dass das Rad Speichen oder zumindest freie Abstände aufweist, so dass trotz Anordnung des Zentrierelementes im Spitzsieb die ausgesiebten Verunreinigungen aus dem Siebbereich oberhalb des Zentrierelementes in den spitz zulaufenden Endbereich des Spitzsiebes unterhalbe des Zentrierelementes absinken können.

In einer besonders bevorzugten Gestaltung der Erfindung ist die Abstreifanordnung mit der Siebhalterung derart verbunden, dass der Antrieb oberhalb der Einfüllöffnung an der Siebhalterung fixiert ist.

Auf diese Weise wird eine besonders kompakte und stabile Vorrichtung geschaffen, da die Ausrichtung von Antrieb und Siebhalterung und damit auch des Spitzsiebes zueinander festgelegt ist. Der Antrieb ist leicht zugänglich oberhalb der Einfüllöffnung platziert und es ist auf diese Weise auch möglich, eine unmittelbare Kopplung des Antriebs mit einer einfachen, langgestreckten und geraden Welle vorzusehen.

In einer bevorzugten Ausgestaltung der erfindungsgemäßen Vorrichtung sind wenigstens drei Abstreifelemente mit der Welle gekoppelt, wobei sich diese in gleichen Winkelabständen von der Welle radial erstrecken.

Die Anordnung von mehr als zwei Abstreifelementen sorgt dafür, dass die Beaufschlagung der Siebinnenseite derart gleichmäßig verläuft, dass eine jederzeitige Spannung des Siebes gewährleistet ist. Das Sieb wird aufgrund der Anlage der versetzten Abstreifelemente jederzeit gespannt gehalten und die Wirkung der Abstreifelemente auf das Sieb wird optimiert. Die Zentrierung der Welle im Sieb ist außerdem bei der Verwendung von drei Abstreifelementen gegenüber weniger Abstreifelementen verbessert.

Es ist besonders bevorzugt, wenn der Antrieb ein drehzahlvariabler Antrieb ist, dessen Drehzahl durch eine Steuereinrichtung zeitabhängig oder in Abhängigkeit vom Füllstand des Spitzsiebes zu steuern ist.

Eine zeitabhängige Drehzahlvorgabe kann beispielsweise vorsehen, den Antrieb periodisch zu betrieben, um eine Siebung des Honigs mit abwechselnden Phasen der Siebreinigung und des Abstreifens und Antriebsfreiheit zu gestalten. Außerdem kann auf eine solche Weise beispielsweise auch die Antriebsrichtung variiert werden. Eine füllstandsabhängige Antriebssteuerung kann insbesondere vorgesehen sein, um einen Siebvorgang assistiert oder sogar unbeaufsichtigt ablaufen zu lassen. Solange die Poren des Siebes ausreichend frei sind, wird der Siebvorgang allein durch Gravitationskraft durchgeführt. Setzen sich jedoch die Poren zu und steigt der Füllstand des Siebes an, setzt sich der Antrieb in Gang oder erhöht sich die Drehzahl des Antriebes, um für eine bessere Durchgängigkeit des Siebes zu sorgen und die Innenseite des Siebes abzureinigen. Dadurch kann effektiv verhindert werden, dass ein Überlaufen des Siebes durch nachlaufenden Honig erfolgt.

Es ist außerdem bevorzugt, dass die Spitze des Spitzsiebes eine Ablassöffnung aufweist, welche mit einer Leitung koppelbar ist, um die Verunreinigungen in der Spitze abzulassen oder abzupumpen.

Wird eine solche Leerung der Siebspitze vorgesehen, kann eine erfindungsgemäße Vorrichtung nahezu kontinuierlich betrieben werden, da die beim Abstreifen absinkenden Verunreinigungen ohne Unterbrechung des Siebvorganges abgelassen werden können.

Die Erfindung wird nun anhand der beiliegenden Zeichnungen näher erläutert.
Figur 1 zeigt ein erstes Ausführungsbeispiel der Erfindung in einer schematischen, geschnittenen Ansicht.
Figur 2 zeigt wesentliche Komponenten der Abstreifvorrichtung der erfindungsgemäßen Vorrichtung gemäß dem ersten Ausführungsbeispiel;
Figur 3 zeigt die Anordnung der Abstreifelemente an der Welle bei der Ausführungsform aus den Figuren 1 und 2;
Figur 4 zeigt die Ausrichtung der Abstreifelemente in einem Spitzsieb mit Hilfe des Zentrierelementes gemäß der ersten Ausführungsform.

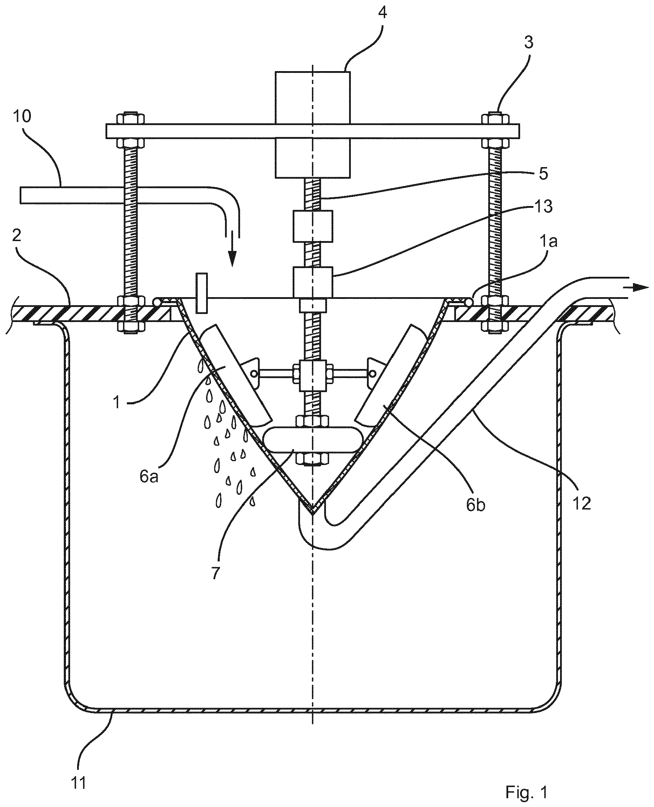

In Figur 1 ist eine Vorrichtung zum Sieben von Honig gemäß einer ersten Ausführungsform der Erfindung gezeigt.

Ein Spitzsieb 1 ist entlang seines Umfanges an einer Siebhalterung 2 fixiert. Die Siebhalterung 2 weist eine Auflage und eine auf das Sieb 1 abgestimmte Kreisöffnung auf. Ein Versteifungsring 1a des Siebes 1 liegt auf der Auflage der Siebhalterung 2 auf und das Sieb 1 erstreckt sich unterhalb der Öffnung der Siebhalterung 2. Eine Antriebshalterung 3 fixiert einen Antrieb 4 oberhalb des Siebes 1, und zwar in Verlängerung der Symmetrieachse (gebrochene Linie) des Siebes 1. Eine Welle 5 erstreckt sich von dem Antrieb 4 in das Sieb 1. Die Welle 5 ist durch den Antrieb 4 drehbar antreibbar.

An der Welle 5 sind mehrere Abstreifelemente 6a, 6b (Abstreifelement 6c hier nicht sichtbar) dargestellt. Außerdem ist ein Zentrierelement 7 vorgesehen, welches endseitig, am unteren Ende der Welle 5 als Rad ausgebildet ist und sich entlang seines Umfanges an dem Sieb 1 abstützt.

Es wird deutlich, dass das Sieb 1 durch die Wirkung des Zentrierelementes 7 und die Fixierung der Welle 5 über den Antrieb 4 an der Antriebshalterung 3 gestrafft wird. Dabei befinden sich die Abstreifelemente 6a und 6b in ausgerichteter Höhe und Entfernung von den Siebinnenseiten des Siebes 1. Das Zentrierelement 7 ist in dieser Ausführungsform drehbar an der Welle gelagert, so dass es bei Antrieb der Welle 5 durch den Antrieb 4 relativ zu dem Sieb 1 in Ruhe verbleibt. Die Abstreifelemente 6a und 6b sind hingegen drehfest mit der Welle 5 gekoppelt und überstreichen bei Drehung der Welle 5 den Innenbereich des Siebes 1 abschnittsweise.

Durch eine Zuleitung 10 eingefüllter Honig tritt durch das Sieb 1 hindurch und wird in einer Wanne 11 aufgefangen. Verunreinigungen werden in dem Sieb 1 zurückgehalten und sinken in die Spitze des Siebes 1 nach unten, von wo sie durch eine Ableitung 12 zeitweise abgepumpt oder abgesaugt werden können.

Die Abstreifelemente 6a und 6b sorgen dafür, dass die Poren des Siebes im überstrichenen Bereich abgereinigt werden und Honig im überstrichenen Bereich durch das Sieb hindurchtreten kann.

Es ist bereits in dieser Darstellung zu erkennen, dass die Abstreifelemente 6a und 6b gelenkig an der Welle 5 angeordnet sind, dies wird jedoch in den nachfolgenden Zeichnungen näher beschrieben.

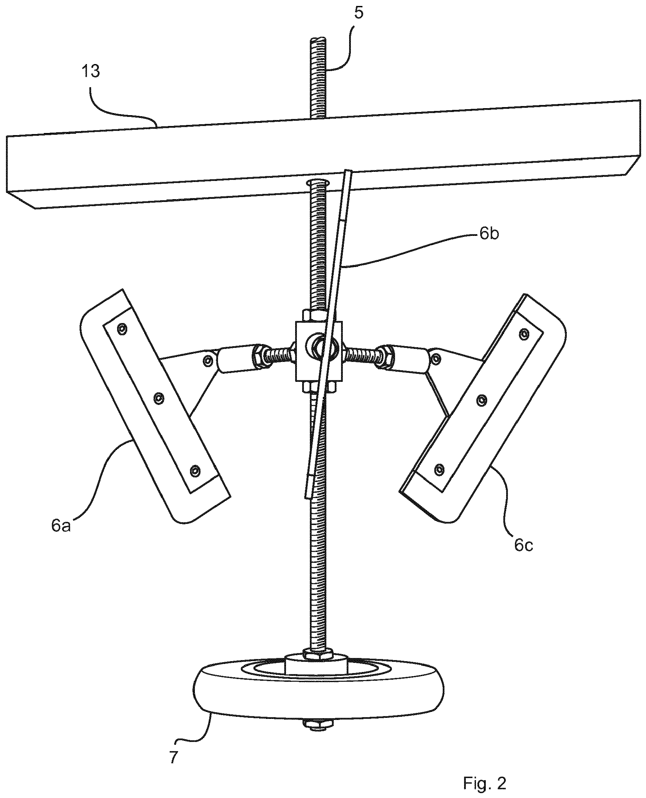

Figur 2 zeigt Elemente der Erfindung, die bereits in Figur 1 dargestellt sind. Die Welle 5 ist in dieser Darstellung durch eine zentrale Bohrung einer Stütze 13 geführt, die in Figur 1 in einer Stirnansicht gezeigt ist. Die Stütze 13 kann zum Führen der Welle auf die Siebhalterung aufgelegt werden und dort ggf. zusätzlich fixiert werden. In dieser Darstellung sind die drei Abstreifelemente 6a, 6b und 6c vollständig sichtbar, die drehfest an der Welle 5 angeordnet sind. Außerdem ist das Zentrierelement 7 als gummiertes Rad erkennbar. Die Abstreifelemente 6a, 6b und 6c weisen, ausgehend von der Welle 5, zunächst starre Gewindeabschnitte auf, die sich senkrecht radial von der Welle 5 erstrecken. Angeschlossen sind gelenkig angekoppelte Schaberabschnitte, welche Kunststoffschaber mit metallischen Einfassungen aufweisen. Die Kunststoffschaber können auf diese Weise hygienisch ausgetauscht werden und bei Abnutzung ersetzt werden. Außerdem wird durch eine angepasste Weichheit des Kunststoffes eine Beschädigung des Siebes vermieden.

Es ist ersichtlich, dass sich die schwenkbaren Schaber an einen Siebwinkel anpassen können. Außerdem können die schwenkbaren Abschnitte mit elastischen Mitteln in die gezeigte Stellung vorgespannt sein, so dass sie mit ihren oberen Abschnitten nach außen gedrängt werden und beim Einsetzen in das Sieb der inneren Kontur des Siebes angepasst werden.

Es ist weiterhin ersichtlich, dass bei der Gestaltung in der gezeigten Weise, nämlich bei Verwendung einer Gewindestange als Welle 5, eine einfache Justage der Höhe der Abstreifelemente 6a, 6b und 6c relativ zu dem Zentrierelement 7 vorgenommen werden kann. Auf diese Weise ist die Einrichtung auch an verschiedene Siebgeometrien in einfacher Weise anpassbar.

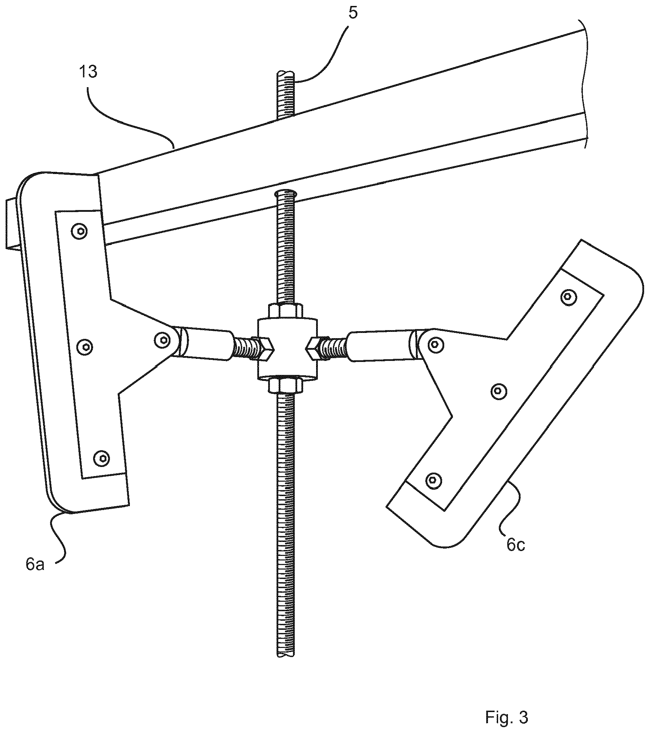

Figur 3 zeigt einige Elemente der Figur 2 aus einer anderen Perspektive. In dieser Darstellung ist das Abstreifelement 6c nach hinten gerichtet und nicht sichtbar. Es wird deutlich, dass die Abstreifelemente 6a und 6b über Gewindestangen drehfest mit der Welle 5 gekoppelt sind und damit auch in axialer Richtung längenverstellbar ausgebildet sein können.

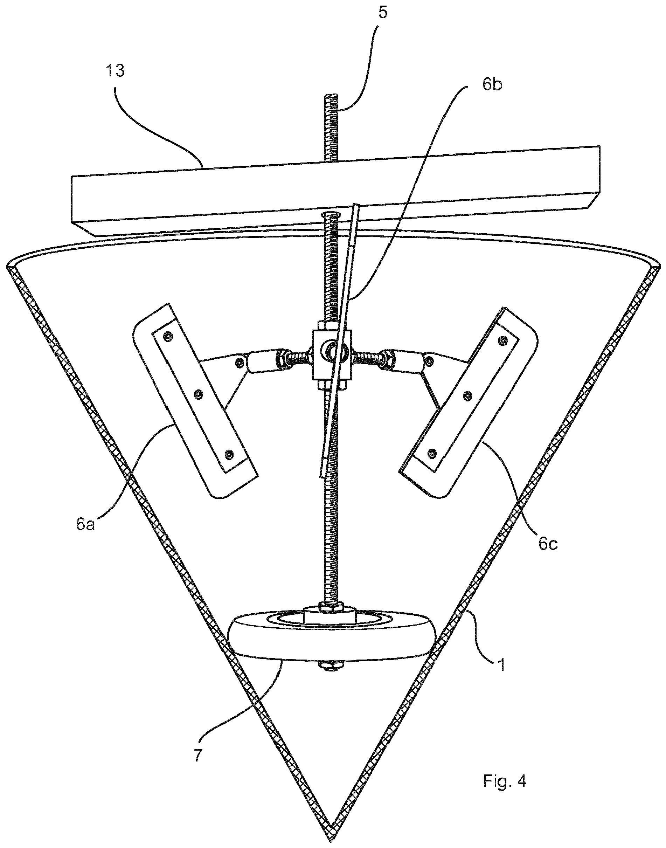

Figur 4 zeigt die Anordnung der Abstreifelemente und des Stützelementes 7 in dem Sieb 1. Durch die umfangsmäßige Anlage des Stützelementes 7 im Sieb wird das Sieb 1 jederzeit gestrafft gehalten, da es im oberen Abschnitt in der Siebhalterung aufgenommen ist und im unteren Abschnitt durch das Zentrierelement 7 entlang des gesamten Umfanges gestrafft wird. Zwischen diesen beiden Haltepunkten überstreichen die Abstreifelemente 6a, 6b und 6c die Innenseite des Siebes und sorgen in diesem Bereich für eine Abreinigung der Siebporen und ein verbessertes Hindurchtreten von gereinigtem Honig durch das Sieb. In dieser Darstellung wird auch besonders gut erkennbar, dass die erfindungsgemäße Vorrichtung für eine Vielzahl von Siebwinkeln anpassbar ist, nämlich durch Veränderung des Abstandes zwischen den Abstreifelementen 6a, 6b und 6c gegenüber dem Zentrierelement 7 und auch die Schwenkbarkeit der Abstreifelemente 6a, 6b und 6c gegenüber der Welle 5 sowie durch die radiale Längenverstellbarkeit der Abstreifelemente.

## Patentansprüche

1. Vorrichtung zum Sieben von zähflüssigen oder pastösen Substanzen, mit einem Spitzsieb (1), welches wenigstens abschnittsweise entlang des Umfangs einer Einfüllöffnung in einer Siebhalterung (2) fixiert ist und sich unterhalb der Siebhalterung (2) erstreckt,
mit einer Abstreifanordnung, welche das Spitzsieb (1) auf dessen Innenseite abschnittsweise überstreicht, wobei die Abstreifanordnung aufweist:
- einen Antrieb (4), der mit einer Welle (5) gekoppelt ist, welche sich von dem Antrieb (4) durch die Einfüllöffnung in das Spitzsieb (1) entlang einer zentralen Symmetrieachse des Spitzsiebes (1) erstreckt, wobei die Welle (5) durch den Antrieb (4) antreibbar ist,
- eine Mehrzahl von Abstreifelementen, welche drehfest mit der Welle (5) gekoppelt sind und sich von der Welle (5) bis zur Innenseite des Spitzsiebes (1) erstrecken,
- ein Zentrierelement, welches unterhalb der Abstreifelemente (6a, 6b, 6c) drehbar mit der Welle (5) gekoppelt ist und sich in dem Spitzsieb (1) zur Zentrierung und Lagerung der Welle (5) im Spitzsieb (1) abstützt.

2. Vorrichtung nach Anspruch 1, wobei der Antrieb (4) als motorischer Antrieb ausgebildet und oberhalb der Einfüllöffnung des Spitzsiebes (1) angeordnet ist.

3. Vorrichtung nach Anspruch 1 oder 2, wobei die Abstreifelemente (6a, 6b, 6c) sich radial von der Welle (5) erstrecken.

4. Vorrichtung nach Anspruch 3, wobei die Abstreifelemente (6a, 6b, 6c) bewegbare Abschnitte aufweisen, welche gegenüber der Welle (5) schwenkbar sind.

5. Vorrichtung nach Anspruch 4, wobei die bewegbaren Abschnitte mit elastischen Mitteln zum Schwenken in eine Ruhestellung vorgespannt sind.

6. Vorrichtung nach einem der vorangehenden Ansprüche, wobei die Abstreifelemente in radialer Richtung von der Welle ausgehend wenigstens teilweise elastisch ausgebildet sind.

7. Vorrichtung nach einem der vorangehenden Ansprüche, wobei die Abstreifelemente wenigstens im Bereich der Anlage am Spitzsieb elastisch ausgebildet sind.

8. Vorrichtung nach einem der vorangehenden Ansprüche, wobei das Zentrierelement (7) an dem nach untern gerichteten Ende der Welle (5) angeordnet ist und als Rad ausgebildet ist, welches sich entlang seines gesamten Umfangs an dem Spitzsieb (1) abstützt.

9. Vorrichtung nach einem der vorangehenden Ansprüche, wobei die Abstreifanordnung mit der Siebhalterung (2) derart verbunden ist, dass der Antrieb (4) oberhalb der Einfüllöffnung an der Siebhalterung (2) fixiert ist.

10. Vorrichtung nach einem der vorangehenden Ansprüche, wobei wenigstens drei Abstreifelemente (6a, 6b, 6c) mit der Welle (5) gekoppelt sind, die sich in gleichen Winkelabständen von der Welle (5) radial erstrecken.

11. Vorrichtung nach einem der vorangehenden Ansprüche, wobei der Antrieb ein drehzahlvariabler Antrieb ist, dessen Drehzahl durch eine Steuereinrichtung zeitabhängig oder in Abhängigkeit vom Füllstand des Spitzsiebes gesteuert wird.

12. Vorrichtung nach einem der vorangehenden Ansprüche, wobei die Spitze des Spitzsiebes (1) eine Ablassöffnung aufweist, welche mit einer Leitung (12) koppelbar ist, um in der Spitze angesammelte Verunreinigungen abzulassen oder abzupumpen.
